Europäisches Patentamt

European Patent Office

Office européen des brevets

(11) Veröffentlichungsnummer: **0 519 108 A1**

# EUROPÄISCHE PATENTANMELDUNG

(21) Anmeldenummer: **91110203.6**

(51) Int. Cl.⁵: **A01K 93/00**

(22) Anmeldetag: **20.06.91**

(43) Veröffentlichungstag der Anmeldung:
**23.12.92 Patentblatt 92/52**

(84) Benannte Vertragsstaaten:
**DE ES FR GR IT**

(71) Anmelder: **Mpizanis, Leonidas**
**Moltkestrasse 44**
**W-6600 Saarbrücken 1(DE)**

(72) Erfinder: **Mpizanis, Leonidas**
**Moltkestrasse 44**
**W-6600 Saarbrücken 1(DE)**

(74) Vertreter: **Brommer, Hans Joachim, Dr.-Ing. et al**
**Patentanwälte Dipl.-Ing. R. Lemcke Dr.-Ing. H.J. Brommer Bismarckstrasse 16 Postfach 4026**
**W-7500 Karlsruhe 1(DE)**

(54) **Pose für Angelschnur.**

(57) Die Erfindung bezieht sich auf eine Pose mit Innenhülse zum Führen der Angelschnur.

Das Besondere der neuen Pose ist darin zu sehen, daß die Angelschnur zum Angeln über Gewässergrund in ein an der Pose angebrachtes, elastisches Befestigungselement geklemmt wird und dadurch die Angeltiefe einstellbar ist.

Die Vorteile der Erfindung bestehen insbesondere darin, daß die gewünschte Angeltiefe leicht einstellbar ist, die Angelschnur sich beim Einholen eines Fisches aus dem Befestigungselement selbsttätig löst und die Pose zum Einholen des Fisches freigibt. Die erfindungsgemäße Pose eignet sich besonders zum Angeln in großer Gewässertiefe.

Fig. 2

EP 0 519 108 A1

Die Erfindung betrifft eine Pose mit einer Gleitführung für die Angelschnur und mit einer Klemmvorrichtung zum lösbaren Befestigen der Pose auf der Angelschnur.

Beim Angeln schwimmen die Posen, die deshalb auch Schwimmer genannt werden, als Zielpunkt an der Wasseroberfläche, um den Angler über die Position der Angelschnur bzw. des Hakens zu orientieren. Zugleich fungieren sie auch als Bißanzeiger, denn beim Anbeißen eines Fisches bewegen sie sich.

Außerdem werden Posen auch dann verwendet, wenn der Köder in einem bestimmten Abstand über dem Gewässergrund schwebend dem Fisch angeboten werden soll. Dann trägt die Pose das mit Gewichten beschwerte Ende der Angelschnur, an der dann meist über ein sogenanntes Vorfach ein oder mehrere Angelhaken mit Köder in der gewünschten Tiefe befestigt sind. In diesem Fall fungiert also die Pose nicht nur als Anzeigeinstrument, sondern auch als Träger, um ein Absinken des Köders auf den Boden zu verhindern.

Bekannt ist aus dem DE-GM 87 06 869 eine Lauf- und Feststellpose, die eine zigarrenähnliche Form aufweist, und bei der die Angelschnur durch zwei übereinander angeordnete, an der Pose befestigte Ösen außen an der Pose freilaufend entlanggeführt wird (Laufpose). Zum Angeln in gewünschter Tiefe wird die Angelschnur durch eine zusätzlich an der Pose angebrachte Federstange an den Posenkörper gedrückt und festgeklemmt; Dadurch hält die Angelschnur den Köder in der gewünschten Tiefe (Feststellpose).

Diese Pose ist jedoch relativ aufwendig in der Herstellung und in der Handhabung. An den kugel- und birnenförmigen Posen lassen sich die Ösen und die Federstange nur unter Schwierigkeiten anbringen und außerdem besteht die Gefahr, daß die Federstange im Gebrauch verbogen wird oder abbricht.

Weit verbreitet sind auch Posen, die durch eine Perle und einen auf dem rutenseitigen Teil der Angelschnur geknüpften Stopperknoten gehalten werden. Durch die Anordnung des Stopperknotens wird die Entfernung der Pose zum Angelhaken bzw. zum Senkblei, das heißt die gewünschte Angeltiefe, eingestellt. Hierbei ist nachteilig, daß beim Umstellen auf eine andere Angeltiefe der Knoten gelöst und ein neuer Knoten an anderer Stelle geknüpft werden muß. Außerdem kann es bei Wind- und Wellen leicht vorkommen, daß die Pose sehr langsam nach unten in Richtung Vorfach rutscht und dadurch die Angeltiefe verändert.

Schließlich ist durch die EP-OS 313 004 ein Wurfschwimmer mit Angelschnurinnenführung bekannt, bei dem sich das Senkblei und ein Teil des Vorfachs in die Innenführung der Pose hineinziehen läßt. Als nachteilig erweist sich dabei, daß beim Einholen der Angelschnur aus großer Tiefe die Pose sehr früh an die Rutenspitze stößt und von Hand gelöst werden muß, ehe die Schnur weiter aufgerollt werden kann.

Hiervon ausgehend liegt der Erfindung die Aufgabe zugrunde, eine Pose zu entwickeln, die sowohl als Lauf- wie auch als Feststellpose verwendbar ist, nicht an eine bestimmte Form gebunden ist und die vorgenannten Nachteile nicht aufweist. Insbesondere soll sich die Pose durch einfaches und genaues Einstellen der gewünschten Angeltiefe über Grund, Zuverlässigkeit im Angelbetrieb und günstige Herstellungskosten auszeichnen.

Diese Aufgabe wird erfindungsgemäß dadurch gelöst, daß der Reibungswiderstand der Gleitführung so gewählt ist, daß beim Nachgeben der Angelschnur die Schnur aufgrund ihrer Gewichtsbelastung bis zum Erreichen des Grundes durch die Pose durchrutscht, wogegen bei gestrafftem Schnurverlauf zwischen Angel und Pose beim Einholen der Schnur die Pose von der Angelschnur gehalten wird.

Hierdurch ergibt sich der Vorteil, daß beim Auswerfen des Köders das Ende der Angelschnur mit dem Köder nach unten rutschen kann, bis das Gewicht, also das Senkblei, auf Grund liegt. Die Gleitführung hält während dieses Durchrutschens die Pose in aufgerichteter Stellung. Ist das Gewicht auf Grund angekommen, so legt sich der Schwimmer aufgrund der nachlassenden Zugspannung in der Schnur um. Der Angler erkennt dies und beginnt die Schnur einzuholen. Entscheidend ist nun, daß bei diesem Einholen der Schnur der Schwimmer nicht wieder zurückrutscht, sondern seine Position an der Schnur beibehält. Dadurch erkennt der Angler genau, wie groß die Schnurlänge von der Wasseroberfläche bis zum Grund, also wie groß die Wassertiefe ist. Er braucht dann lediglich die Pose um soviele Meter in Richtung zum Gewicht hin verschieben, wie er über Grund angeln möchte. In der gewünschten Stellung wird die Angelschnur dann mit der Pose verklemmt und die Schnur mit Ködern ausgeworfen. Die Pose, die so bemessen sein muß, daß sie das Senkblei auf jeden Fall zu tragen vermag, gewährleistet dann, daß der Köder in der gewünschten Höhe über Grund ausgebracht wird.

Zur Herstellung der gewünschten Reibungsverhältnisse in der Gleitführung derart, daß die Angelschnur einerseits bis zum Erreichen des Grundes durch die Pose hindurchrutscht, andererseits beim Einholen der Schnur von ihr gehalten und mitgenommen wird, empfiehlt es sich, daß die Pose einen Haken aufweist, in den die Angelschnur seitlich einhängbar ist. Dieser Haken braucht lediglich gegenüber der Gleitführung genügend weit seitlich versetzt zu sein und nur einen relativ kleinen Öffnungsschlitz an der Seite aufweisen, wo die Angelschnur nicht von alleine herausrutschen kann. Nach Wiedereinholen der Schnur kann die Schnur aus dem Haken herausgenommen und an der Pose so festgeklemmt werden, daß letztere zuverlässig die Gewichtsbelastung trägt.

Zweckmäßig ist die Klemmvorrichtung so ausgestaltet, daß sich die Angelschnur beim Einrollen selbsttätig von der Pose löst. Zu diesem Zweck wie auch grundsätzlich zur leichteren Handhabung empfiehlt es sich, daß die Klemmvorrichtung am rutenseitigen Ende der Gleitführung der Pose angeordnet ist. Sie kann aus einem oder mehreren an der Gleitführung etwa radial nach außen laufenden Schlitzen bestehen, so daß die Angelschnur leicht in einem dieser Schlitze elastisch verklemmbar ist. Hierzu kann die Klemmvorrichtung durch einen elastischen Ring gebildet sein, der in seiner Oberseite die genannten Schlitze aufweist, während er nach innen abgestuft oder abgerundet in die Gleitführung übergeht.

Besonders zweckmäßig ist es, wenn die Klemmvorrichtung gegebenenfalls austauschbar in einem Träger angeordnet ist, an dem seinerseits der vorgenannte Haken angeformt ist.

Damit die Angelschnur gut verklemmt werden kann, hat es sich als günstig erwiesen, daß die Pose an ihrem der Klemmvorrichtung gegenüberliegenden Ende der Gleitführung einen vorstehenden Ring, insbesonere aus elastischem Material aufweist. Dadurch kann die Angelschnur an ihrem einen aus der Pose herauslaufenden Ende gegen diesen Ring gedrückt und somit arretiert werden, während ihr anderes Ende in die Klemmvorrichtung hineingedrückt wird.

Die Gleitführung in der Pose erfolgt zweckmäßig über eine zentrale Innenhülse.

Weitere Merkmale und Vorteile der Erfindung ergeben sich aus der nachfolgenden Beschreibung eines Ausführungsbeispieles anhand der Zeichnung; Dabei zeigt

Fig. 1 die Einzelteile einer erfindungsgemäßen Pose in halbperspektivischer Darstellung,

Fig. 2 die aus den Einzelteilen gemäß Fig. 1 zusammengesetzte Pose,

Fig. 3 eine erfindungsgemäße Pose als Laufpose und

Fig. 4 eine erfindungsgemäße Pose als Feststellpose.

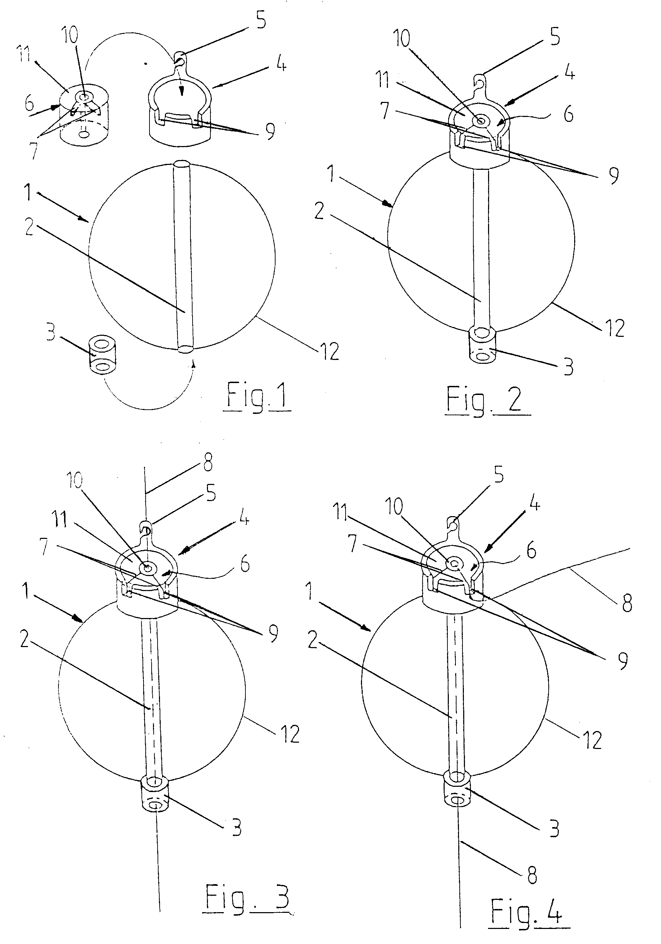

Die in den Fig. 1 bis 4 als Ausführungsbeispiel gewählte Pose 1 besteht gemäß Fig. 1 im wesentlichen aus einem kugelförmigen Hohlkörper 12, in dessen Innern eine diametral verlaufende Hülse 2 als Angelschnurinnenführung angeordnet ist, aus einer ringförmigen Hülse 4, die am oberen Ende zu einem Haken 5 ausgebildet ist, aus einem zylindrischen Befestigungselement 6 und aus einem zylindrischen Ring 3.

Die ringförmige Hülse 4 ist, wie in Fig. 2 dargestellt, am rutenseitigen Ende der Innenhülse 2 auf dem Hohlkörper 12 befestigt und dient zur Aufnahme des Befestigungselementes 6. Das Befestigungselement 6, das aus einem elastischen Werkstoff, beispielsweise Gummi, besteht und auf den Innendurchmesser der Hülse 4 abgestimmt ist, wird wie ein Stopfen in die Hülse 4 gepreßt und ist dadurch gegen unbeabsichtigtes Lösen aus der Hülse 4 verklemmt und gesichert.

Das Befestigungselement 6 weist eine zentrale Bohrung 10 auf, die mit der Innenhülse 2 in Verbindung steht. Von der Bohrung 10 ausgehend sind in die Deckfläche 11 des Befestiungselementes 6 vorzugsweise zwei radial nach außen verlaufende Schlitze 7 eingebracht. Den Schlitzen 7 zugeordnet sind Einkerbungen 9 im oberen Rand der Hülse 4. - Es ist natürlich denkbar, auch nur einen Schlitz 7 vorzusehen oder mehr als zwei Schlitze 7 anzuordnen.

Der zylindrische Ring 3 der vorzugsweise aus Hartgummi besteht, ist auf der dem Vorfach zugewandten Seite des Hohlkörper 12 in Verlängerung der Innenhülse 2 befestigt; er dient als Austrittsöffnung für die innengeführte Angelschnur 8 und schützt diese vor Beschädigungen beim Ab- und Aufrollen.

Bei Verwendung der erfindungsgemäßen Pose 1 als Laufpose, d. h. beim Angeln auf Gewässergrund, wird die Angelschnur 8 entsprechend der Darstellung in Fig. 3 in den Haken 5 der Hülse 4 eingehängt, durch die Bohrung 10 des Befestigungselementes 6 der Innenhülse 2 des Hohlkörpers 12 zugeführt und über den zylindrischen Ring 3 aus der Pose 1 hinausgeführt. Beim Aufbringen der Pose 1 auf die Wasseroberfläche gleitet die Angelschnur 8 vom Gewicht des am Vorfach montierten Senkbleis gezogen durch die Pose 1 und stoppt, wenn das Senkblei den Gewässergrund erreicht hat. Nach dem Anbeißen eines Fisches wird die Angelschnur 8 durch die Pose 1 frei gleitend aufgerollt, bis der Fisch gekeschert werden kann. Auch beim Angeln in sehr großer Tiefe, beispielsweise in Seen oder im Meer, läßt sich die vorfachseitig entsprechend lange Angelschnur 8 ohne Behinderung durch die Pose 1 einrollen.

Bei Verwendung der erfindungsgemäßen Pose 1 als Feststellpose, d. h. beim Angeln über Gewässergrund, erfolgt das Einstellen der Angeltiefe einfach und problemlos durch Einhängen der Angelschnur am Haken 5. Danach Ausrollen der Angelschnur bis an den Gewässergrund. Anschließend Lösen der Schnur vom Haken 5 und Ziehen der Angelschnur in die gewünschte Höhe sowie danach Einpressen der Angelschnur 8 in einen der Schlitze 7, wie in Fig. 4 gezeigt ist. Die Schlitze 7 sind so ausgebildet, daß ihre Breite kleiner ist als der Durchmesser der Angelschnur 8 und eine Klemmwirkung zwischen Schlitz 7 und Angelschnur 8 herstellbar ist. Wenn Senkblei und Köder die gewünschte Tiefe erreicht haben, strafft sich die Angelschnur 8 unterhalb der Pose 1 und richtet diese auf.

Nach Anbeißen eines Fisches läßt sich die Angelschnur 8 durch eine ruckartige Bewegung gegen das Gewicht des Senkbleis und des Fisches leicht aus dem Schlitz 7 lösen und das Einrollen der Angelschnur 8 erfolgt dann in gleicher Weise wie bei der Laufpose frei gleitend durch die Pose 1.

Beim Angeln mit extrem leichtem Senkblei kann unter Umstäpden das ruckartige Anschlagen nicht ausreichen, um die Angelschnur 8 aus dem Schlitz 7 zu lösen. In diesem Fall wird die Angelschnur 8 so weit eingeholt bis die Pose 1 an den letzten Rutenring stößt und dadurch sich die Angelschnur 8 aus dem Schlitz 7 löst.

Als besonders vorteilhaft erweist sich die erfindungsgemäße Ausbildung der Pose 1 beim Angeln in sehr großer Tiefe. Die Angelschnur 8 läßt sich ohne die bei den bekannten Feststellposen auftretenden Schwierigkeiten und Behinderungen durch die an der Angelschnur 8 befestigten und nur von Hand lösbaren Pose 1 vollständig einrollen, da die Angelschnur sich aufgrund der erfindungsgemäßen Ausbildung selbsttätig von der Pose 1 löst.

Die Ausbildung der Erfindung ist selbstverständlich nicht nur auf die als Ausführungsbeispiel gewählte Kugel- oder Birnenform der Pose beschränkt. Alle bekannten Posentypen sind erfindungsgemäß ausstattbar.

Zusammenfassend liegt also der Kern der Erfindung darin, daß die Gleitführung der Angelschnur 8 durch die Pose 1 hindurch so umgelenkt wird, daß die Schnur beim Nachgeben der Angelschnur bis zum Erreichen des Grundes durchrutschen kann, wogegen sie beim Einholen der Schnur von der Angelschnur festgehalten und mitgenommen wird und darin, daß die Pose nach Verschieben in die gewünschte Position mit der Angelschnur verklemmt wird.

Es liegt im Rahmen der Erfindung, nicht nur einen, sondern mehrere Haken vorzusehen. Diese Haken können in geeigneter Weise auf der Pose verteilt angeordnet werden.

Ebenso liegt es im Rahmen der Erfindung, die Klemmvorrichtung an beliebiger Stelle der Pose, auch mehrfach, beispielsweise unten und oben vorzusehen.

Nicht zuletzt besteht auch Freiheit bezüglich des Verlaufes der Angelschnur. Die Angelschnur braucht also nicht unbedingt die Pose zu durchqueren, sondern kann stattdessen oder zusätzlich auch an der Außenseite der Pose verlegt werden.

**Patentansprüche**

1. Pose (1) mit einer Gleitführung für die Angelschnur (8) und mit einer Klemmvorrichtung (6) zum lösbaren Befestigen der Pose (1) auf der Angelschnur (8),
dadurch gekennzeichnet,
daß der Reibungswiderstand der Gleitführung so gewählt ist, daß beim Nachgeben der Angelschnur (8) von der Angel die Schnur aufgrund ihrer Gewichtsbelastung bis zum Erreichen des Grundes durch die Pose (1) durchrutscht, wogegen bei gestrafftem Schnurverlauf zwischen Angel und Pose beim Einholen der Schnur (8) die Pose (1) von der Angelschnur (8) gehalten wird.

2. Pose nach Anspruch 1,
dadurch gekennzeichnet,
daß die Pose (1) einen oder mehrere Haken (5) aufweist, in den bzw. in die die Angelschnur (8) einhängbar ist.

3. Pose nach Anspruch 2,
dadurch gekennzeichnet,
daß der Haken (5) gegenüber einer Führung (2) der Angelschnur (8) an oder in der Pose (1) seitlich versetzt ist.

4. Pose nach einem der vorhergehenden Ansprüche,
dadurch gekennzeichnet,
daß die Klemmvorrichtung (6) am rutenseitigen Ende der Führung (2) angeordnet ist.

5. Pose nach einem der vorhergehenden Ansprüche,
dadurch gekennzeichnet,
daß die Klemmvorrichtung (6) aus einem oder mehreren etwa radial nach außen laufenden Schlitzen (7) besteht, in dem bzw. in denen die Angelschnur (8) verklemmbar ist.

6. Pose nach einem der vorhergehenden Ansprüche,
dadurch gekennzeichnet,
daß die Klemmvorrichtung (6) durch einen elastischen Ring (11) mit Schlitzen (7) gebildet ist, der nach innen abgestuft oder abgerundet in eine mit der Führung (2) korrespondierende zentrale Bohrung (10) übergeht.

7. Pose nach einem der vorhergehenden Ansprüche,
dadurch gekennzeichnet,
daß die Klemmvorrichtung (6) in einem Träger (4) angeordnet ist, an den seinerseits der Haken (5) angeordnet ist.

**8.** Pose nach einem der vorhergehenden Ansprüche,
dadurch gekennzeichnet,
daß sie an ihrem der Klemmvorrichtung (6) gegenüberliegenden Ende der Führung (2) einen vorstehenden Ring (3), insbesondere aus elastischem Material, aufweist.

**9.** Pose nach einem der vorhergehenden Ansprüche,
dadurch gekennzeichnet,
daß die Führung in der Pose (1) durch eine zentrale Innenhülse (2) erfolgt.

Fig.1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | AT-B-362 610 (KUBISKO JAKOB) | 1,4,5 | A01K93/00 |
| A | * Seite 3, Zeile 36 - Seite 4, Zeile 7; Abbildungen * | 6,7 | |
| | --- | | |
| A | EP-A-0 119 074 (KESSLER, THEODORE P.) | 1,2 | |
| | * Seite 9, Zeile 18 - Seite 10, Zeile 32; Abbildungen * | | |
| | --- | | |
| D,A | DE-U-8 706 869 (TAAKE, SIEGFRIED) | 1,2 | |
| | * Seite 3; Abbildungen * | | |
| | ----- | | |

RECHERCHIERTE SACHGEBIETE (Int. Cl.5)

A01K

Der vorliegende Recherchenbericht wurde für alle Patentansprüche erstellt

| Recherchenort | Abschlußdatum der Recherche | Prüfer |
|---|---|---|
| BERLIN | 14 FEBRUAR 1992 | MARTIN DEL RIO A. |